(19) Europäisches Patentamt
European Patent Office
Office européen des brevets

(11) **EP 1 491 483 B1**

(12) **EUROPÄISCHE PATENTSCHRIFT**

(45) Veröffentlichungstag und Bekanntmachung des Hinweises auf die Patenterteilung:
**12.08.2009 Patentblatt 2009/33**

(51) Int Cl.:
***B66B 7/02*** *(2006.01)*

(21) Anmeldenummer: **04013313.4**

(22) Anmeldetag: **05.06.2004**

(54) **Befestigungselement für Aufzugsführungsschienen**

Mounting element for elevator guide rails

Dispositif de montage pour guides d' ascenseur

(84) Benannte Vertragsstaaten:
**AT CH DE FR GB LI**

(30) Priorität: **25.06.2003 EP 03405459**

(43) Veröffentlichungstag der Anmeldung:
**29.12.2004 Patentblatt 2004/53**

(73) Patentinhaber: **Inventio AG**
**6052 Hergiswil NW (CH)**

(72) Erfinder: **Rogger, Martin, Ing.**
**6343 Rotkreuz (CH)**

(56) Entgegenhaltungen:
CH-A- 618 779          FR-A- 590 823
US-A- 2 149 902        US-A- 2 459 741
US-A- 2 496 770

## Beschreibung

Die Erfindung betrifft ein Befestigungselement für Aufzugsführungsschienen nach dem Oberbegriff des Anspruchs 1, dessen Herstellungsverfahren nach dem Anspruch 2 und dessen Montageverfahren nach dem Anspruch 3.

Aufzüge mit Kabinen werden in einem Schacht entlang von Führungsschienen verfahren.

Bekannte schall- und schwingungsdämpfende Befestigungselemente für Führungsschienen sind meist zwischen zwei Metallplatten einvulkanisierte Gummipuffer, wobei die Metallplatten je nach Bedarf mit Gewindebolzen oder Gewindelöchern versehen sind. Diese Befestigungselemente sind eine Unterlage der Führungsschienen. Um eine reihenweise, verschiebbare Montage mehrerer Geräte oder Bauelemente zu ermöglichen, ist in einer Weiterbildung dieser Befestigungselemente eine Ankerschiene bekannt geworden, welche mittels eines aufvulkanisierten Gummipolsters mit einem metallischen Trägerprofil verbunden ist.

Die Bauweise dieser im Handel erhältlichen Befestigungselemente hat den Nachteil, dass sie betreffend Material und Herstellung relativ teuer ist.

Die Forderung nach Schallisolation im modernen Wohnungsbau bedingt, dass beispielsweise wesentliche Teile einer Aufzugsanlage wie Führungsschienen, Türen, Regler usw. schall- und schwingungsdämpfend befestigt werden müssen, wobei diese Bauteile aus Sicherheitsgründen im Falle eines Brandes ihre Lage nur unwesentlich verändern dürfen. Diese Forderung können jedoch die vorstehend erwähnten bekannten Befestigungselemente nicht oder nur teilweise erfüllen.

Die Patentschrift CH 618779 offenbart ein schall- und schwingungsdämpfendes Befestigungselement, insbesondere für den Hochbau.

Bei diesem Befestigungselement ist eine Ankerschiene mittels eines Dämpfungsmediums mit einer Trägerschiene verbunden. Damit die auf der Ankerschiene befestigten Bauelemente im Falle eines Brandes ihre Lage nicht wesentlich verändern können, ist die Ankerschiene innerhalb der einen C-förmigen Querschnitt aufweisenden Trägerschiene angeordnet, wobei die Profilschlitze beider Schienen einander gegenüberliegen und die Trägerschiene bis auf die Höhe des Profilschlitzes der Ankerschiene mit dem Dämpfungsmedium ausgefüllt ist. Im Raum zwischen den Profilschlitzen ist eine Sicherheitsplatte vorgesehen, die mittels eines die Bauelemente tragenden Befestigungsbolzens und einer Mutter mit der Ankerschiene verschraubt ist. Um die Schwingungsübertragung zwischen Ankerschiene und Trägerschiene zu vermeiden, ist zwischen der Sicherheitsplatte und den dieser unmittelbar benachbarten Innenflächen der Trägerschiene ein Spiel vorgesehen.

Das oben beschriebene Befestigungselement weist Nachteile auf.

Das in der Patentschrift CH 618779 beschriebene Befestigungselement beschränkt sich auf ein Element, welches eingemauert bzw. einbetoniert, also in einem Trägerelement integriert wird. Die Nachrüstung einer vorhandenen Befestigung ist nicht möglich. Es ist also ein bauseitiger Bestandteil, welcher in einem entsprechend frühem Stadium vorgesehen bzw. bereitgestellt werden muss. Es kann nur mit grossem Aufwand an einem bestehenden Trägerelement befestigt (z.B. angeschraubt) werden.

Auch weist die in der Patentschrift CH 618779 beschriebene Sicherheitsplatte Nachteile auf. Da zwischen der Trägerschiene und der Sicherheitsplatte ein Spiel vorhanden ist, besteht beim Wirken einer Kraft, welche dieses Spiel versucht aufzuheben aber nicht gegen ein Dämpfungsmedium wirken kann, die Gefahr dass sich das Dämpfungsmedium von der Trägerschiene und der Ankerschiene ablösen kann und somit das Bauteil zerstört bzw. funktionsuntüchtig gemacht würde. Die nach Patentschrift CH 618779 beschriebene Lösung kann im wesentlichen nur Kräfte, welche das Dämpfungsmedium komprimieren, nicht aber auf Zug bzw. Scherung beanspruchen, aufnehmen. Da der Profilquerschnitt einer handelsüblichen Ankerschiene beschränkt und relativ kleinflächig ist, muss die Profillänge entsprechend lang ausgeführt werden, damit relativ hohe Kräfte übertragen werden können. Nach dieser Lösung kann über die Profilhöhe z.B. die Profillänge nicht auf ein Minimum reduziert werden.

Es ist nun Aufgabe der vorliegenden Erfindung, ein schall- und schwingungsdämpfendes Befestigungselement für Aufzugsführungsschienen vorzuschlagen, das diese Nachteile nicht aufweist.

Es ist eine weitere Aufgabe der vorliegenden Erfindung, ein verbessertes schall- und schwingungsdämpfendes Befestigungselement für Aufzugsführungsschienen vorzuschlagen, das sich kostengünstiger herstellen lässt, das den Sicherheitserfordernissen im Brandfall gerecht wird und das auch Zugkräfte aufnehmen kann.

Eine weitere Aufgabe der vorliegenden Erfindung besteht darin, ein Montageverfahren eines Schall- und/oder schwingungsdämpfenden Befestigungselements für Aufzugsführungsschienen vorzuschlagen, wobei ermöglicht wird, eine genaue Abstimmung auf die zu absorbierenden Frequenzen herzuleiten und wobei die Isolation leicht und präzis den zu absorbierenden Frequenzen angepasst wird.

Die Lösung dieser Aufgaben erfolgt erfindungsgemäss für das eingangs genannte Befestigungselement gemäss den Merkmalen des kennzeichnenden Teils des Anspruchs 1 und 2 und für das eingangs genannte Montageverfahren gemäss den Merkmalen des kennzeichnenden Teils des Anspruchs 3.

Vorteilhafte Weiterbildungen sind durch die jeweiligen abhängigen Ansprüche definiert.

Bei dem Befestigungselement nach der Erfindung handelt es sich um ein Schall- und/oder schwingungsdämpfendes Befestigungselement für Aufzugsführungsschienen, bestehend aus einer Ankerschiene, die mittels eines Dämpfungsmediums mit einer Trägerschiene verbunden ist, in welcher die die Aufzugsführungsschiene zu tragen bestimmte Ankerschiene im Dämpfungsmedium eingebettet parallel zur länglichen Ausdehnung der Trägerschiene verlaufend angeordnet ist. Die längliche Ausdehnung verläuft weitgehend parallel zur Fahrtrichtung der Kabine im Schacht. Die Ankerschiene und Trägerschiene sind durch mindestens einen Schlitz voneinander beabstandet und dieser Schlitz ist durch das Dämpfungsmedium gefüllt.

Dämpfungsmedium ist ein Material, das durch einen wesentlich höheren Dämpfungskoeffizient für Schall und/oder Schwingungen als denjenigen von Stahl oder Aluminium gekennzeichnet ist.

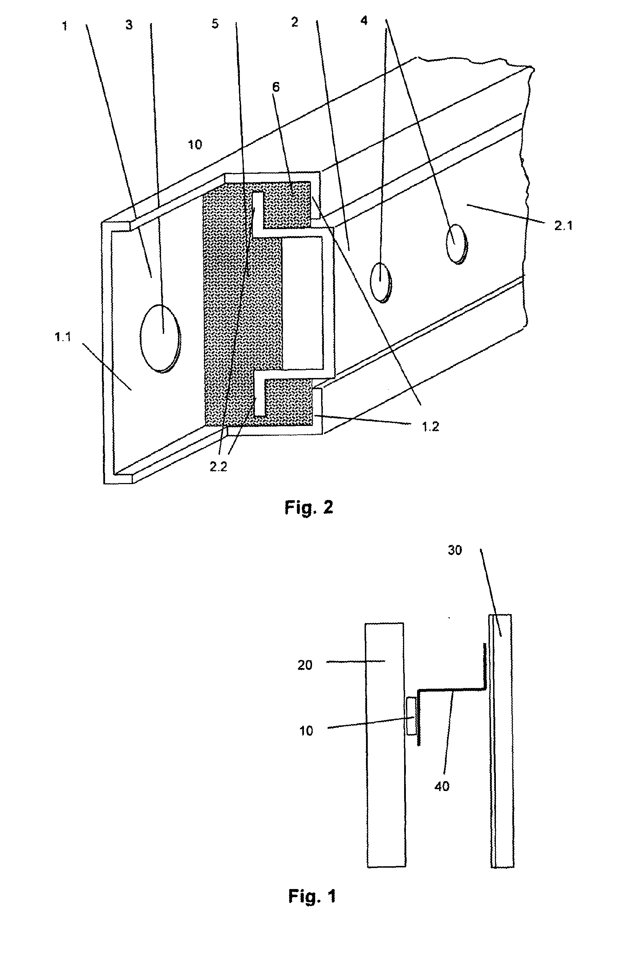

Ein Schlitz ist der Raum, der zwischen zwei gegenüberliegenden L-Profilen eingeschlossen ist (siehe Fig. 2).

Der Vorteil der Erfindung besteht darin, dass die gegenüber der Trägerschiene schwingungsisolierte Ankerschiene in alle Richtungen belastbar ist. Dies wird durch den mit Dämpfungsmedium gefüllten Schlitz zwischen Ankerschiene und Trägerschiene bewerkstelligt. Mit einem gedämpften Anschlag bzw. Sicherheitsbolzen kann ein Bauteilversagen gänzlich ausgeschlossen werden. Es können dann nur noch definierbare Maximal-Scherkräfte auftreten, welche somit ein Ablösen der zwischen der Trägerschiene und der Ankerschiene liegenden Gummi bzw. Dämpfungsmedium nicht ablösen können. Kräfte in x-, y- und z-Richtung, sowie auch Torsionsmomente können entsprechend aufgenommen und gedämpft werden, d.h. auf den Profilquerschnitt bezogen in Längsachse (z-Achse), sowie quer in beiden Achsen (x- und y-Achsen).

Ein weiterer Vorteil der Erfindung besteht darin, dass die gesamte Einheit sowohl auf bzw. an einem Bauelement, als auch in einem Bauelement integriert werden kann.

Vorteilhaft ist, dass als Gummi bzw. Dämpfungsmedium vulkanisierbare sowohl als auch giessbare Materialien eingesetzt werden können.

Vorteilhaft ist des Weiteren, dass die verschiedensten Befestigungsmöglichkeiten mit Gewinden unterschiedlichster Grössen und sogar Stiftlöcher usw. möglich sind.

Auch ist vorteilhaft, das Befestigungselement so herzustellen, dass dies nach den Bedürfnissen aus einer als Meterware produzierten langen Stange ausgeschnitten wird.

Ferner ist es vorteilhaft, wenn das Befestigungselement so geschnitten und montiert wird, dass seine Länge auf eine zu absorbierende Frequenz abgestimmt wird.

Die Erfindung ist im Folgenden anhand in den Zeichnungen dargestellter Ausführungsbeispiele ausführlich beschrieben.

Es zeigen

Figur 1    eine Aufzugsführungsbefestigung nach der Erfindung, in schematischer Darstellung;

Figur 2    das Befestigungselement für Aufzugsführungsschienen nach der Erfindung.

Gleiche, beziehungsweise gleich wirkende, konstruktive Elemente sind in allen Figuren mit gleichen Bezugszeichen versehen, auch wenn sie in Einzelheiten nicht gleich ausgeführt sind.

Figur 1 zeigt ein Gesamtsystem. Die Aufzugsführungsschienen 30 werden durch den Befestigungsbügel 40 am Schachtwand 20 befestigt. Ein Befestigungselement 10 wird zwischen Schachtwand und Befestigungsbügel eingeschoben, um Schall und Schwingungen zu dämpfen.

Fig. 2 zeigt ein Befestigungselement 10 nach der Erfindung.

Eine Trägerschiene 1 besteht aus einer Grundplatte 1.1 und zwei L-Profilen 1.1. Die Trägerschiene 1 ist mit einem Dämpfungsmedium 5 ausgefüllt, das vorzugsweise aus einem giessbaren Kunststoff aus Elastomere oder Kautschuk besteht. Im Dämpfungsmedium 5 ist eine parallel zur Trägerschiene 1 verlaufende Ankerschiene 2 eingebettet. Die Ankerschiene 2 besteht auch aus einer Grundplatte 2.1 und zwei L-Profilen 2.1, wobei die L-Profile der Trägerschiene 1 und der Ankerschiene 2 einander gegenüber liegen und die Trägerschiene 1 mit dem Dämpfungsmedium 5 ausgefüllt ist. Das Dämpfungsmedium kann die Trägerschiene 1 vollständig ausfüllen, aber auch eventuell mit Hohlräumen versehen sein. Zwischen Trägerschiene und Ankerschiene entsteht durch die L-Profile ein Formschluss.

Der Raum, der zwischen den zwei gegenüberliegenden L-Profilen 1.2 und 2.2 eingeschlossen ist (siehe Fig. 2), bildet einen Schlitz 6.

Dieser Schlitz ist so bemessen, dass sich die von den Führungsschienen 30 verursachten Schwingungen nicht auf die Schachtwand 20 übertragen können.

Bei Zerstörung des Dämpfungsmedium 5, z. B. im Falle eines Brandes, kann die mit der Ankerschiene 2 und dem Befestigungsbügel 40 fest verschraubte Führungsschienen 30 wegen des geringen Spieles der Ankerschiene 2 in der Trägerschiene 1 seine Lage nur unwesentlich verändern, so dass seine Funktion nicht beeinträchtigt wird.

Die Trägerschiene 1 wird typischerweise mit Befestigungslöchern 3 bis M16 Ankerbolzen versehen. Die Ankerschiene 2 wird mit mehreren Gewindelöchern 4 bis M12 ausgebildet, für die Aufnahme der Führungsbefestigungen welche isoliert werden sollen.

Zwischen diesen beiden Profilen 1 und 2, welche aus gepressten oder gewalzten Stahlprofilen bzw. abgekanteten Blechprofilen bestehen, ist das Dämpfungsmedium 5 z.B. aufvulkanisiertes Gummi. Die Form der beiden Profile 1 und 2 ist so gewählt, dass im Prinzip ein Formschluss vorhanden ist und der Schlitz 6 entsteht. Der Abstand zwischen beiden Profilen 1 und 2 beträgt im unbelasteten Zustand ca. 3 - 5 mm und ändert sich durch die Belastung welche von den Führungsschuhdrücken und der Gebäudesetzung (Durchstosskräfte) herrühren können. Bei einer Überlastung kann praktisch eine Schallbrücke entstehen, welche so im Prinzip eine Veränderung des akustischen Verhaltens bewirkt. Dies kann als Indikator für eine Veränderung der Gegebenheiten im Allgemeinen ausgewertet werden, z.B. Baukontraktion, die eventuell verwertbar ist. Über die Gesamtlänge der Einheit kann eine optimale Isolation auf die aufzunehmenden Kräfte abgestimmt werden.

Das Befestigungselement 10 kann vorteilhafterweise als Meterware/Stangenmaterial produziert und dann, je nach Bedarf, abgelängt und somit genau den Bedürfnissen angepasst werden: je kürzer desto weicher/absorbierender; je länger desto steifer/härter. Die Herstellung wird somit preisgünstig.

Über die Länge oder aber auch über die Anzahl der Befestigungselemente 10 kann eine genaue Abstimmung auf die zu absorbierenden Frequenzen hergeleitet werden. Die Isolation kann leicht und präzise den zu absorbierenden Frequenzen angepasst werden.

Die längliche Ausdehnung wird als parallel zur Fahrtrichtung der Aufzugskabine definiert. Die seitliche Ausdehnung wird als senkrecht zur Fahrtrichtung der Aufzugskabine definiert.

Je nach Verwendung werden Längen von 250 - 500 mm vorgesehen. Die längliche Ausdehnung ist wesentlich grösser als die seitliche Ausdehnung. Als Dicken der kompletten Einheiten sind 45 - 55 mm vorgesehen, damit die Flächenpressung p die idealen Werte von 0.25 < p < 0.40 N/mm nicht unter- bzw. überschreitet. Die Härte der Dämpfungselemente soll im Bereich von 50 - 70 Sh A liegen, damit die Einfederung systembedingt den Wert von 3 mm nicht überschreiten kann.

Die zu absorbierenden Störfrequenzen werden grundsätzlich gemessen. Folgende Komponenten haben ihren Einfluss auf das System und deren Erregerfrequenzen (bei VKN = 1.0 m/s) sind teilweise bekannt:

| Komponente | Erregerfrequenz $f_{err}$ [min$^{-1}$] |
|---|---|
| Hubmotor (1000, 1500 und 1950 prm bei VKN = 1.00 m/s) | 990, 1290/1309, 1850 |
| Schneckenwelle (Zahnfrequenz Übersetzungsverhältnis) | 2970, 2580/2618, 5550 |
| Treibscheibe $\varnothing$ 320 mm | 60 |
| Tragseile $\varnothing$ 8 mm | 26112 |
| Geschwindigkeitsbegrenzer (GBPD), Seilscheibe $\varnothing$ 200 mm | 95 |
| Geschwindigkeitsbegrenzer (GBPD), Begrenzerwippen (8 Nocken) | 764 |
| Begrenzerseil | 14688 |

Die Geometrie bzw. die Härte der Dämpfungselemente werden durch Schwingungs- bzw. Kraftmessung in x-, y- und z-Richtung ermittelt. Zusätzlich kann die Einheit durch eine FEM-Analyse simuliert werden.

Als Faustregel gilt: Isolierbereich $\geq \sqrt{2}$ x Erregerfrequenz (Faustformel). Die Eigenfrequenz des Dämpfungselements soll wenigstens 40% der Störfrequenz betragen.

Die Eigenfrequenz $f_e$ des Dämpfungselements kann beispielweise durch die folgende annähernde Formel berechnet werden:

$$f_e = \tfrac{1}{2}\pi * \sqrt{(C/m)}$$

wobei m die zwischen zwei aufeinanderfolgenden Befestigungspunkten liegende Masse der Führungsschiene und C die lineare Steifigkeit der Befestigungselemente darstellt.

Die Länge l eines Befestigungselements, um eine bestimmte Erregerfrequenz zu dämpfen, kann somit eindeutig bestimmt werden.

Die Länge der Befestigungselemente kann z.B. mit einem Arbeitsgang/Schnitt realisiert werden. Die beidseitigen Anschlüsse (Schnittstelle zur Struktur = Bausubstanz) sind immer gleich ausgebildet.

4

**EP 1 491 483 B1**

Die Herstellung kann mit gezogenen oder aber auch mit abgekanteten Grundprofilen erfolgen.

Man kann aber auch mit gestanzten oder gelaserten und dann abgekanteten Kleinteilen operieren.

Man kann auch Normprofile, welche dann aber maschinell nachgearbeitet werden müssten, verwenden.

Das Befestigungselement 10 kann mit einfachsten Mitteln beschafft und verarbeitet werden. Es braucht keine aufwändigen, vorgeformten Isolatoren. Handelsübliche, rechteckförmige Profile genügen vollauf.

Gemäss einer kostensparenden, bevorzugten Ausführungsform besteht das Dämpfungsmedium aus einem giessbaren Kunststoff.

Die mit der Erfindung erzielten Vorteile liegen einerseits in der Sicherheit der Befestigung der Bauelemente im Falle eines Brandes oder durch Hitzeeinwirkung und andererseits in der preisgünstigen Herstellung. Der vorgeschlagene giessbare Kunststoff aus Elastomere/Kautschuk, z. B. Polyurethan, verbindet sich gut mit sandgestrahltem Stahl, ist ölbeständig, ozonfest und alterungsbeständiger als die bekannten, mit vulkanisierten Gummidämpfern ausgerüsteten Befestigungselemente. Ausserdem ist es möglich, je nach Bedarf verschiedene Härtegrade zu realisieren.

Als Dämpfungsmedium kann man auch andere geeignete preisgünstigere Materialien verwenden.

## Patentansprüche

1.  Schall- und/oder schwingungsdämpfendes Befestigungselement (10) für Aufzugsführungsschienen (30), bestehend aus einer aus einer Grundplatte (2.1) und zwei L-Profilen (2.2) bestehenden Ankerschiene (2), die mittels eines Dämpfungsmediums (5) mit einer aus einer Grundplatte (1.1) und zwei L-Profilen (1.2) bestehenden Trägerschiene (1) verbunden ist, in welcher die die Aufzugsführungsschiene zu tragen bestimmte Ankerschiene im Dämpfungsmedium (5) eingebettet parallel zur länglichen Ausdehnung der Trägerschiene (1) verlaufend angeordnet ist, und die L-Profile (2.2) der Ankerschiene und die L-Profile (1.2) der Trägerschiene (1) einander gegenüber liegen und durch mindestens einen Schlitz (6) voneinander beabstandet sind,
    **dadurch gekennzeichnet,**
    **dass** dieser Schlitz vollständig bis auf die Höhe der L-Profile (1.2) der Trägerschiene (1) durch das Dämpfungsmedium (5) gefüllt ist.

2.  Herstellungsverfahren eines Schall- und/oder schwingungsdämpfenden Befestigungselements (10) für Aufzugsführungsschienen (30) nach Anspruch 1,
    **dadurch gekennzeichnet,**
    **dass** das Befestigungselement (10) nach den Bedürfnissen aus einer als Meterware produzierten langen Stange ausgeschnitten wird.

3.  Montageverfahren eines Schall- und/oder schwingungsdämpfenden Befestigungselements (10) für Aufzugsführungsschienen (30) nach Aspruch 1,
    **dadurch gekennzeichnet,**
    **dass** die L-Profile (2.2) der Ankerschiene (2) auf die L-Profile (1.2) der Trägerschiene (1) durch mindestens einen Schlitz (6) voneinander beabstandet montiert wird und dass dieser Schlitz (6) vollständig durch das Dämpfungsmedium (3) gefüllt wird.

4.  Montageverfahren nach Anspruch 3,
    **dadurch gekennzeichnet,**
    **dass** die Länge des Befestigungselements auf eine zu absorbierende Frequenz abgestimmt wird.

5.  Montageverfahren für Aufzugsführungsschienen,
    **dadurch gekennzeichnet,**
    **dass** die Aufzugsführungsschienen auf Befestigungselementen nach Anspruch 1 montiert werden.

## Claims

1.  Sound-damping and/or vibration-damping fastening element (10) for lift guide rails (30), consisting of an anchor rail (2), which consists of a base plate (2.1) and two L-profiles (2.2) and which is connected by means of a damping medium (5) with a support rail (1), which consists of a base plate (1.1) and two L-profiles (1.2) and in which the anchor rail, which is intended to support the lift guide rail, is arranged to be embedded in the damping medium (5) and to extend parallel to the longitudinal extent of the support rail (1), and the L-profiles (2.2) of the anchor rail and the L-profiles (1.2) of the support rail (1) are disposed opposite one another and spaced apart by at least one slot (6), **characterised in that** this slot is completely filled by the damping medium (5) up to the height of the L-profiles (1.2) of the support rail (1).

2. Method of manufacturing a sound-damping and/or vibration-damping fastening element (10) for lift guide rails (30) according to claim 1, **characterised in that** the fastening element (10) is cut according to requirements from a long bar produced as piece goods.

3. Method of mounting a sound-damping and/or vibration-damping fastening element (10) for lift guide rails (30) according to claim 1, **characterised in that** the L-profiles (2.2) of the anchor rail (2) are mounted on the L-profiles (1.2) of the support rail (1) to be spaced from one another by at least one slot (6) and that this slot is completely filled by the damping medium (3).

4. Mounting method according to claim 3, **characterised in that** length of the fastening element is tuned to a frequency to be absorbed.

5. Mounting method for lift guide rails, **characterised in that** the lift guide rails are mounted on fastening elements according to claim 1.

**Revendications**

1. Elément de fixation insonore et/ou antivibration (10) pour des guides d'ascenseur (30), composé d'un rail d'ancrage (2) qui comprend une plaque de base (2.1) et deux profilés en L (2.2) et qui est relié à l'aide d'un moyen isolant (5) à un rail porteur (1) qui comprend une plaque de base (1.1) et deux profilés en L (1.2) et dans lequel le rail d'ancrage destiné à porter le guide d'ascenseur est disposé parallèlement à l'extension longitudinale dudit rail porteur (1) en étant enrobé dans le moyen isolant (5), les profilés en L (2.2) du rail d'ancrage et les profilés en L (1.2) du rail porteur (1) se faisant face et étant espacés par au moins une fente (6),
**caractérisé en ce que** cette fente est entièrement remplie par le moyen isolant (5) jusqu'à la hauteur des profilés en L (1.2) du rail porteur (1).

2. Procédé de fabrication d'un élément de fixation insonore et/ou antivibration (10) pour des guides d'ascenseur (30) selon la revendication 1, **caractérisé en ce que** l'élément de fixation (10) est découpé en fonction des besoins dans une longue barre produite au mètre.

3. Procédé de montage d'un élément de fixation insonore et/ou antivibration (10) pour des guides d'ascenseur (30) selon la revendication 1, **caractérisé en ce que** les profilés en L (2.2) du rail d'ancrage (2) sont montés sur les profilés en L (1.2) du rail porteur (1) en étant espacés par au moins une fente (6) et **en ce que** cette fente (6) est entièrement remplie par le produit isolant (5) .

4. Procédé de montage selon la revendication 3, **caractérisé en ce que** la longueur de l'élément de fixation est adaptée à une fréquence à absorber.

5. Procédé de montage pour guides d'ascenseur, **caractérisé en ce que** les guides d'ascenseur sont montés sur des éléments de fixation selon la revendication 1.

**Fig. 2**

**Fig. 1**

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 618779